(19) **Europäisches Patentamt**

**European Patent Office**

**Office européen des brevets**

(11) **EP 1 587 853 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(51) Int Cl.:
***C08G 65/20*** (2006.01)

(21) Anmeldenummer: **04701294.3**

(22) Anmeldetag: **10.01.2004**

(86) Internationale Anmeldenummer:
**PCT/EP2004/000120**

(87) Internationale Veröffentlichungsnummer:
**WO 2004/065455 (05.08.2004 Gazette 2004/32)**

(54) **VERFAHREN ZUR AUFARBEITUNG VON KATALYSATOREN ZUR FARBZAHLHYDRIERUNG VON POLYTETRAHYDROFURAN UND/ODER DESSEN ESTERN**

METHOD FOR PROCESSING CATALYSTS FOR COLOR NUMBER HYDROGENATION OF POLYTETRAHYDROFURAN AND/OR THE ESTERS THEREOF

PROCEDE POUR REGENERER DES CATALYSEURS SERVANT A L'HYDROGENATION DE POLYTETRAHYDROFURANE ET/OU DE SES ESTERS A FAIBLE INDICE DE COULEUR

(84) Benannte Vertragsstaaten:
**AT BE BG CH CY CZ DE DK EE ES FI FR GB GR HU IE IT LI LU MC NL PT RO SE SI SK TR**

(30) Priorität: **20.01.2003 DE 10301833**

(43) Veröffentlichungstag der Anmeldung:
**26.10.2005 Patentblatt 2005/43**

(73) Patentinhaber: **BASF Aktiengesellschaft 67056 Ludwigshafen (DE)**

(72) Erfinder:
• **MENGER, Volkmar 67434 Neustadt (DE)**
• **SCHWARZTRAUBER, Michael 67435 Neustadt (DE)**

(56) Entgegenhaltungen:
**WO-A-00/43124          DE-A- 3 112 065**

**Beschreibung**

Die Erfindung betrifft ein Verfahren zur Aufarbeitung von zumindest teilweise deaktivierten Katalysatoren, die zur Herstellung von Polytetrahydrofuran, Polytetrahydrofuranmono- und diestern mit geringer Farbzahl durch Behandlung mit Wasserstoff verwendet wurden, das auch als Farbzahlhydrierung bezeichnet wird.

Es ist aus DE-A 31 12 065 bekannt, dass die Wasserstoffbehandlung von Polytetrahydrofuran (im folgenden "PTHF" genannt) oder Polytetrahydrofuranmono- und/oder diestern (im folgenden "PTHF-ester" bezeichnet) in Gegenwart von Hydrierkatalysatoren zu entsprechenden Polymeren mit geringer Farbzahl führt. Als PTHF-ester fallen dabei insbesondere PTHF-monoacetate, PTHF-diacetate oder deren Gemische ins Gewicht, die durch Polymerisation von Tetrahydrofuran (im folgenden "THF" genannt) in an sich bekannter Weise bevorzugt in Gegenwart von Acetanhydrid an verschiedenen Hydrierkatalysatoren zugänglich sind.

Im allgemeinen neigen auch Hydrierkatalysatoren im Laufe der Betriebsstunden zu einer Abnahme von Aktivität und Selektivität. Nach Erreichen eines nicht mehr akzeptablen Grenzwertes ist daher der Hydrierkatalysator eines großtechnisch betriebenen Farbzahlhydrierprozesses gegen einen frischen Hydrierkatalysator hoher Aktivität und Selektivität auszutauschen.

Das Auswechseln des gebrauchten, deaktivierten Katalysators ist im allgemeinen mit einer Reinigungsprozedur verbunden, durch die der gebrauchte Katalysator von anhaftendem Produkt, insbesondere von PTHF und PTHF-estern, befreit wird.

Dabei wird bei den für die Farbzahlhydrierung verwendeten Hydrierkatalysatoren üblicherweise so vorgegangen, dass nach Entleeren des PTHF oder der PTHF-ester der noch produkthaltige Katalysator im Reaktor mit heißem Wasser, das ungefähr 60 bis 90°C warm ist, mehrmals diskontinuierlich oder kontinuierlich gespült wird. Dabei fallen zum einen große Mengen Spülwasser an. Die anfallenden Spülwassermengen müssen aufgearbeitet werden. Andererseits ist die Reinigung des Katalysators von anhaftenden Verunreinigungen unvollständig, da beispielsweise PTHF-diacetate wasserunlöslich sind.

Durch die unvollständige Reinigung des Hydrierkatalysators durch das Spülen mit heißem Wasser kommt es beim Absaugen des Katalysators, das üblicherweise mit einer Abkühlung einhergeht, zum Verkleben der Katalysatorpartikel zu größeren Einheiten wie Körnern oder Klumpen. Das bei großtechnischen Prozessen erforderliche Absaugen des Katalysators aus dem Reaktor wird erschwert oder unmöglich gemacht. Der ausgebaute Hydrierkatalysator ist zudem auch nach der Reinigungsprozedur noch stark belastet.

Alternativ kann der Katalysator mit Lösungsmitteln wie Methanol gewaschen werden. Man erhält auf diesem Wege zwar einen gut rieselfähigen und daher absaugbaren Katalysator. Nachteilig ist jedoch der hohe Zeitaufwand von mehreren Tagen für diese Prozedur sowie die erforderliche kostenintensive Aufarbeitung des zum Waschen verwendeten Methanols.

Aufgabe der Erfindung ist es, ein Verfahren zur Aufarbeitung von gebrauchten Katalysatoren, die für die Herstellung von PTHF, PTHF-monoestern und/oder PTHF-diestern mit geringer Farbzahl durch Behandlung mit Wasserstoff verwendet wurden, das einen schnellen und kostengünstigen Katalysatorwechsel erlaubt, und bei dem aufbereiteter Katalysator erhalten wird, der von Produktresten weitgehend befreit ist, und in der nachfolgenden Entsorgung gut handhabbar ist.

Gelöst wurde die Aufgabe durch ein Verfahren zur Aufarbeitung von zumindest teilweise des-aktivierten Hydrierkatalysatoren für die Farbzahlhydrierung von PTHF und/oder PTHF-diestern, bei dem der Hydrierkatalysator durch Behandlung mit Wasserdampf bei einer Temperatur von im allgemeinen 100 bis 250°C, bevorzugt 100 bis 200°C, besonders bevorzugt 100 bis 150°C, und einem Überdruck von im allgemeinen 0 bis 40 bar, bevorzugt 1 bis 16 bar, besonders bevorzugt bei 2 bis 4 bar, gereinigt wird. Der gereinigte Hydrierkatalysator der Farbzahlhydrierung von PTHF und/oder PTHF-estern kann in einem zweiten Schritt der Entsorgung zugeführt werden. Bevorzugt wird er einer Metallwiedergewinnung zugeführt, jedoch ist es auch möglich den gereinigten Hydrierkatalysator zu deponieren, regenerieren oder zu verbrennen.

Durch die Wasserdampfbehandlung werden die Hydrierkatalysatoren soweit gereinigt, dass das bei der Wasserdampfreinigung anfallende Eluat einen Eindampfrückstand EDR von ≤ 2 % aufweist.

Das erfindungsgemäße Verfahren wird zur Aufarbeitung von zumindest teilweise desaktivierten Hydrierkatalysatoren für die Farbzahlhydrierung von PTHF und/oder PTHF-estern, bevorzugt PTHF-monoacetaten und/oder PTHF-diacetaten eingesetzt. Teilweise desaktiviert ist der Hydrierkatalysator der Farbzahlhydrierung dann, wenn er seine ursprüngliche katalytische Aktivität verloren hat und/oder wenn die Farbzahl des Polymerisats durch die Farbzahlhydrierung nicht mehr deutlich gesenkt werden kann.

Ein teilweise desaktiverter Hydrierkatalysator kann beispielsweise noch eine Restktivität von 80 % der ursprünglichen Aktivität aufweisen. Es können Hydrierkatalysatoren aufgearbeitet werden, die zur Farbzahlhydrierung von Polymerisaten aus der Polymerisation von THF zu PTHF oder aus der Co-Polymerisation von THF mit Alkylenoxiden, wie Ethylenoxid oder Propylenoxid, zu den entsprechenden Polybutylenalkylenglyolhern eingesetzt wurden, wobei sowohl die Polymerisation als auch die Co-Polyerisation in Gegenwart von Telogenen durchgeführt worden sein kann.

Telogene sind beispielsweise Wasser, ein- oder mehrwertige Alkohole wie Methanol, Ethanol, Propanol, Ethylenglykol, Butylenglykol, Glycerin, Neopentylglykol, 1,4-Butandiol, ferner alihatische Carbonsäuren mit 1 bis 8 C-Atomen wie Ameisensäure, Essigsäure, Propionsäure, Buttersäure, und aromatische Carbonsäuren wie Benzoesäure sowie deren Anhydride.

Die zumindest teilweise desaktivierten Hydrierkatalysatoren der Farbzahlhydrierung sind mit den Produkten der Polymerisation bzw. Co-Polymerisation verunreinigt. Produkte der Polymerisation bzw. Co-Polymerisation sind PTHF, Polybutylenalkylenglykolether bzw. deren Reaktionsprodukte mit den genannten Telogenen, wie z.B. PTHF-monoester, PTHF-diester.

Das erfindungsgemäße Verfahren wird zur Aufarbeitung von Hydrierkatalysatoren zur Farbzahlhydrierung eingesetzt. Geeignete Hydrierkatalysatoren sind beispielsweise aus DE-A 31 12 065 bekannt und enthalten die Metalle der 8. Nebengruppe, insbesondere Nickel, Kobalt, Eisen sowie die Edelmetalle Ruthenium, Palladium oder Platin, ferner Kupfer. Die Metalle können in reiner Form, z.B. als Raney-Metalle oder z.B. als reduzierte Oxide angewendet werden. Bewährt haben sich aber auch Katalysatoren, die die Hydriermetalle auf geeigneten Träger, wie Aluminiumoxid, Siliciumoxid, Bimsstein, Bentonit oder z.B. Magnesiumsilikat enthalten. Die Katalysatoren, welche unedle Metalle wie Eisen, Kobalt, Nickel und Kupfer enthalten, werden zweckmäßig vor der Anwendung durch Reduktion mit Wasserstoff in die aktive Form überführt. Bei der Anwendung von Edelmetallkatalysatoren erübrigt sich in den meisten Fällen eine solche Operation. Vorzugsweise wird das erfindungsgemäße Verfahren auf Hydrierkatalysatoren zur Farbzahlhydrierung, welche Nickel und Kupfer enthalten und bevorzugt geträgert sind, angewandt.

Um das erfindungsgemäße Verfahren durchzuführen wird der Farbzahlhydrierreaktor durch Ablassen der Reaktionsmischung entleert. Der noch im Reaktor befindliche Katalysator wird dann vorzugsweise von oben nach unten kontinuierlich oder diskontinuierlich mit Wasserdampf bei einer Temperatur von 100 bis 250°C, bevorzugt 100 bis 200°C, besonders bevorzugt 100 bis 150°C und einem Überdruck von 0 bis 40 bar, bevorzugt 1 bis 16 bar, besonders bevorzugt 2 bis 4 bar, behandelt.

Durch den physikalischen Strippeffekt des Wasserdampfes wird die Rieselfähigkeit des Hydrierkatalysators wieder hergestellt, so dass dieser problemlos aus dem Hydrierreaktor entfernt werden kann. Es können auf diese Weise beliebige Katalysatorschüttungen in beliebigen Reaktionsapparaten aufbereitet werden. Beispielsweise kann der Katalysator in Form von Split, Strängen, Kugeln oder sonstigen Formkörpern vorliegen. Der gereinigte Katalysator kann beispielsweise durch Absaugen aus dem Hydrierreaktor oder durch Ablassen von unten entfernt werden.

Die Behandlungszeit mit Wasserdampf beträgt im allgemeinen jedoch 2 bis 100 h, besonders bevorzugt 5 bis 50 h.

Durch Kondensation des Wasserdampfes wird entweder im Hydrierreaktor oder bevorzugt in einem separaten Apparat das Wasser und vom Katalysator entfernte Verunreinigungen enthaltendes Eluat (Kondensat) gewonnen.

Aus diesem Eluat können enthaltenes PTHF, PTHF-monoester oder PTHF-diester beispielsweise durch Phasentrennung abgetrennt werden. Es ist auch möglich, das Eluat destillativ aufzuarbeiten. Es ist weiterhin möglich das erhaltene PTHF und/oder die PTHF-ester in einen separaten Apparat zu depolymerisieren. Die durch die Depolymerisation erhaltenen Monomere können rückgeführt werden. Das zurückbleibende Restkondensat kann als Abwasser einer Kläranlage zugeführt werden.

Der nach dem erfindungsgemäßen Verfahren gereinigte Hydrierkatalysator der Farbzahlhydrierung ist von PTHF und/oder PTHF-ester gereinigt und kann, da er feinkörnig und rieselfähig ist, problemlos aus dem Reaktor abgesaugt werden. Mit dem erfindungsgemäßen Verfahren wird ein reibungsloser Katalysatorausbau aus dem Reaktor möglich. Der desaktivierte Hydrierkatalysator der Farbzahlhydrierung von PTHF und/oder PTHF-estern kann bevorzugt einer Metallrückgewinnung zugeführt werden. Es ist auch möglich ihn zu deponieren, regenerieren oder zu verbrennen.

Durch die nachfolgenden Beispiele wird die Erfindung näher erläutert.

Farbzahlhydrierung

Tetrahydrofuran wurde nach der in der Deutschen Offenlegungsschrift 2916 653 (US 4189 566) beschriebenen Methode der kontinuierlichen Polymerisation an Bleicherde als Katalysator und Essigsäureanhydrid als Reglersubstanz polymerisiert. Die in dieser Offenlegungsschrift ebenfalls beschriebene Vorbehandlung zur Reinigung marktgängigen Tetrahydrofurans unterblieb. Für die Polymerisation wurde technisches Tetrahydrofuran der Firma BASF Aktiengesellschaft eingesetzt. Man stellte ein PTHF-diacetat vom Molekulargewicht 650 gemäß der im Beispiel 3 der DE-A 29 16 653 her. Dieses Polymerisat besaß eine Farbzahl von 100 APHA. Das den Reaktor verlassende PTHF-diacetat wurde von unten nach oben über ein Katalysatorbett, das aus 3 mm Kieselgelsträngen bestand, die 0,4 % Palladium enthielten geleitet und dabei Wasserstoff eingegast. Das die Hydrierung verlassende Produkt wies eine Farbzahl von weniger als 10 APHA auf. Die Katalysatorbelastung betrug 0,4kg Polymerisatlösung pro Liter Katalysator und Stunde. Die stündlich eingeleitete Waserstoffmenge betrug 1 Nl/l Polymerisatlösung. Die hydrierend behandelte Polymerisatlösung wurde vom überschüssigen Tetrahydrofuran befreit und das resultierende Diacetat verseift. Man erhielt schließlich PTHF mit einer Farbzahl von etwa 15 APHA und einer Säurezahl von 0 mg KOH/g.

Beispiel 1

Der für die vorstehend beschriebene Farbzahlhydrierung verwendete teilweise desaktivierte Katalysator wurde nach einer Standzeit von 23 Monaten 24 h mit 4 bar Wasserdampf von oben nach unten bei 160°C behandelt. Der Mengenstrom betrug ca. 1 t/h.

Nach 24 h wurde eine sehr gut rieselfähige Katalysatorschüttung erhalten, die problemlos abgesaugt werden konnte. Das gegen Ende erhaltene Kondensat wies TOC-Gehalte von < 1 % auf. Die weiteren Analysewerte sind Tabelle 1 zu entnehmen. Tabelle 1 sind weiterhin als Beispiel V1 die entsprechenden Werte eines gleich zu Beginn der Wasserdampfbehandlung erhaltenen Kondensats zu entnehmen.

Bestimmung der Säurezahl (SZ)

Die Säurezahl wird mittels Äquivalenzpunkttitration mit Kaliumhydroxid (KOH) bestimmt. Die Säurezahl gibt die Menge an Kaliumhydroxid in mg an, die erforderlich ist, um 1 g der Probe zu neutralisieren.

Bestimmung des Eindampfrückstand (EDR)

Der Eindampfrückstand ist der unter festgelegten Bedingungen ermittelte nicht verdampfbare Anteil in PTHF oder PTHF-ester-Leichtsiedergemischen. Eine Probe wird zur Bestimmung des EDR 60 min bei 140 °C unter Normaldruck und 30 min bei gleicher Temperatur und einem Vakuum kleiner 1 mbar in einem Verdampferkolben eingedampft. Der Eindampfrückstand wird errechnet nach

$$EDR = \frac{m_2 \times 100}{m_1}$$

Hierbei bedeuten

EDR = Eindampfrückstand, Massenkonzentration nach DIN 1310 in g/100 g
$m_1$ = Masse in g des Verdampferkolbens mit der Probe
$m_2$ = Masse in g des Verdampferkolbens mit dem Eindampfrückstand
100 = Umrechnungsfaktor von g in 100 g

Bestimmung des THF-Gehalts

Der THF-Gehalt des Eluats wurde gaschromatographisch bestimmt (Head-space-Gaschromatographie).

Tabelle 1

| Beispiel | EDR [%] | SZ [mg KOH/g] | THF [ppm] |
|----------|---------|---------------|-----------|
| V1 | 17,4 | 5,7 | 29171 |
| 1 | 1,28 | 10,6 | 652 |

**Patentansprüche**

1. Verfahren zur Aufarbeitung von zumindest teilweise desaktiviertem Hydrierkatalysator für die Farbzahlhydrierung von PTHF und/oder PTHF-estern, bei dem ein Nickel, Kobalt, Eisen, Ruthenium, Palladium, Platin oder Kupfer enthaltender Hydrierkatalysator durch Behandlung mit Wasserdampf bei einer Temperatur von 100 bis 250°C und einem Überdruck von 0 bis 40 bar gereinigt wird.

2. Verfahren nach Anspruch 1, **dadurch gekennzeichnet, dass** der Hydrierkatalysator geträgert ist.

3. Verfahren nach einem der Ansprüche 1 oder 2 zur Aufarbeitung von Hydrierkatalysatoren für die Farbzahlhydrierung von PTHF-monoacetat und/oder PTHF-diacetat.

**EP 1 587 853 B1**

**Claims**

1. A process for working up an at least partially deactivated hydrogenation catalyst for the color number hydrogenation of PTHF and/or PTHF esters, in which a hydrogenation catalyst comprising nickel, cobalt, iron, ruthenium, palladium, platinum or copper is purified by treatment with steam at from 100 to 250°C and a gauge pressure of from 0 to 40 bar.

2. The process according to claim 1, wherein the hydrogenation catalyst is a supported catalyst.

3. The process according to either of claims 1 and 2 for working up hydrogenation catalysts for the color number hydrogenation of PTHF monoacetate and/or PTHF diacetate.


**Revendications**

1. Procédé de traitement d'un catalyseur d'hydrogénation au moins partiellement désactivé pour l'hydrogénation de PTHF et/ou d'esters de PTHF à indice de couleur, dans lequel un catalyseur d'hydrogénation contenant du nickel, du cobalt, du fer, du ruthénium, du palladium, du platine ou du cuivre est purifié par traitement à la vapeur d'eau à une température de 100 à 250°C et sous une surpression de 0 à 40 bars.

2. Procédé suivant la revendication 1, **caractérisé en ce que** le catalyseur d'hydrogénation est sur support.

3. Procédé suivant l'une des revendications 1 et 2, pour le traitement de catalyseurs d'hydrogénation prévu pour l'hydrogénation de monoacétate et/ou de diacétate de PTHF à indice de couleur.